Europäisches Patentamt

European Patent Office

Office européen des brevets

(11) Publication number: **0 313 671 B1**

# EUROPEAN PATENT SPECIFICATION

(45) Date of publication of patent specification: **10.02.93**  (51) Int. Cl.5: **H02P 7/62**

(21) Application number: **88904266.9**

(22) Date of filing: **13.05.88**

(86) International application number:
**PCT/JP88/00459**

(87) International publication number:
**WO 88/09087 (17.11.88 88/25)**

The file contains technical information submitted
after the application was filed and not included in
this specification

(54) **TEMPERATURE COMPENSATIVE REVOLUTION SPEED CONTROL FOR AN INDUCTION MOTOR.**

(30) Priority: **13.05.87 JP 116444/87**

(43) Date of publication of application:
**03.05.89 Bulletin  89/18**

(45) Publication of the grant of the patent:
**10.02.93 Bulletin  93/06**

(84) Designated Contracting States:
**CH DE FR GB LI**

(56) References cited:
**US-A- 4 442 393**

**Patent Abstracts of Japan, vol. 10, no. 108,
(E-398)(2165) 23 April 1986 & JP-A-60245490**

**Patent Abstracts of Japan, vol. 10, no. 228
(E-426) (2284) 8 August 1986 & JP-A-6162385**

(73) Proprietor: **OTIS ELEVATOR COMPANY
10 Farm Springs
Farmington, CT 06032(US)**

(72) Inventor: **IWASA, Masao
3-1692-1-1002, Makuhari-cho
Chiba-shi Chiba-ken 281(JP)**
Inventor: **KITO, Yasutami
715, Aza Ochiai Oaza Ochiai Haruhimura
Nishikasugai-gun Aichi-ken 452(JP)**

(74) Representative: **Tomlinson, Kerry John et al
Frank B. Dehn & Co. European Patent Attor-
neys Imperial House 15-19 Kingsway
London WC2B 6UZ(GB)**

EP 0 313 671 B1

Rank Xerox (UK) Business Services

Patent Abstracts of Japan, vol. 8, no. 8, (E-221) (1445) 13 January 1984 & JP-A-58172990

Patent Abstracts of Japan vol. 10, no.347, (E-457) (2403) 21 November 1986 & JP-A-61147788

IEEE Transactioins on Industrial Electronics, vol. IE-33, no.3 August 1986 New York US K.Ohnishi et al.: " Model reference adaptive system against rotor resistance variation in induction motor drive"

IEEE Transactions on Industry Applications, vol. IA-19, no. 3, Parti 1 May June 1983 New York US. Y Matsuda et al.: " Development of PWM inverter employing GTO"

# Description

## BACKGROUND OF THE INVENTION

### Field of the Invention

The present invention relates generally to a control system for an induction motor. More specifically, the invention relates to a revolution speed control system for an induction motor. Further particularly, the invention relates to a temperature compensative revolution speed control for an induction motor.

### Description of the Background Art

In motor speed control for controlling revolution speed of an induction motor, motor driving torque can be illustrated by:

$$T = K \times I_0 \times I_2$$

where
$I_0$ is the exciting current;
$I_2$ is the secondary current; and
$K$ is a constant.
In slip frequency control, the secondary current $I_2$ can be illustrated by:

$$I_2 = S \times E_1/r_2$$

where
$S$ is slip
$E_1$ is a primary voltage
$r_2$ is a secondary resistance.
Therefore, in the motor speed control in the slip frequency control, the motor revolution speed can be determined by the slip $S$, the primary voltage $E_1$ and the secondary resistance $r_2$. Therefore, in automatic motor speed control, these factors are taken as control parameters.

As is well known, the secondary resistance is variable depending upon the temperature condition. Therefore, in order to precisely control the motor speed, it becomes necessary to detect the secondary resistance precisely. For this, there are various methods for obtaining the secondary resistance for precise motor speed control.

For example, according to one method, the secondary resistance is theoretically and arithmetically derived on the basis of primary current, slip frequency, terminal voltage and so forth. This method is effective for executing precise motor speed control as long as the induction motor is continuously driven under stable conditions. However, in cases where the load on the induction motor frequently changes and uniform acceleration and deceleration characteristics are required irrespective of temperature conditions, as in an elevator, this method cannot provide satisfactory response characteristics. In order to obtain a satisfactorily high response rate to variation of the secondary resistance, it is necessary to provide a thermosensor or so forth. Therefore, it is difficult to control the motor speed with satisactorily high precision irrespective of the temperature condition.

On the other hand, in practice, motor torque control may be performed by taking the slip frequency S and primary current $I_1$ ($= I_0{}^2 + I_2{}^2$) as control parameters and setting other parameters as a constant value K. In order to obtain satisfactory precision in torque control, it is also necessary to vary the constant K depending upon the temperature condition.

U.S. Patent No. 4,442, 393 to Abbondanti discloses an apparatus and method for determing the operation of an induction motor. U.S. Patent No. 4,442,393 discloses a control system for an AC induction motor, whereby dynamic characteristics of the motor are determined using equivalent circuit methods. The motor resistances are determined from sensed terminal voltages and currents of the motor. Once the resistance is known other parameters such as slip and temperature can be derived. The motor can then be controlled to prevent over-heating or overload.

## SUMMARY OF THE INVENTION

It is a principle object of the present invention to provide a motor speed control system for an induction motor, which, while the slip frequency of the induction motor is one (S = 1), can provide satisfactorily high precision speed control irrespective of temperature variations.

Another object of the invention is to provide a motor speed control system which, while very low frequency of direct current is applied to the induction motor, can obtain temperature dependent secondary resistance data, with satisfactorily high precision.

In order to accomplish aforementioned and other objects, a revolution speed control system, according to the present invention, projects the secondary resistance in an induction motor based on the relationship between the primary current and the primary voltage. Based on the projected secondary resistance, slip and secondary current are corrected so that the torque to be generated by the induction motor can be held coincident with that ordered by a control signal.

According to one aspect of the invention, there is provided a control system for an induction motor including a primary winding and a secondary winding comprising a driver circuit connected to the induction motor for supplying a driving power for the induction motor, a first sensor monitoring a primary current of the driving power to be supplied to the primary winding, a second sensor monitoring a primary voltage of the driving power to be supplied to the primary winding, first means, in a central processing unit, for deriving a primary resistance in the primary winding on the basis of the primary current and the primary voltage, the first means being active while the slip frequency of the induction motor is one (S = 1), a second means, in the central processing unit, for deriving a secondary resistance of the secondary winding on the basis of the primary resistance the second means being active while the slip frequency of the induction motor is one, and a third means, in the central processing unit, for deriving a control signal to control the driving power on the basis of the primary voltage and the secondary resistance.

In a preferred embodiment the first and second means are active while frequency current or direct current is applied to the induction motor.

The first means and second means are active while a fixed constant current is applied to the primary winding in order to derive the primary resistance on the basis of the primary voltage.

According to another aspect of the invention, a method for deriving a secondary winding resistance in an induction motor which has a primary winding connected to a driving power source and a secondary winding, as a control parameter for controlling driving torque and/or revolution speed of the induction motor, comprising the steps of:

monitoring a primary current in the driving power to be supplied to the primary winding;

monitoring a primary voltage in the driving power to be supplied to the primary winding;

deriving a primary resistance in the primary winding on the basis of the primary current and the primary voltage, said derivation occurring when the slip frequency of the induction motor (20) is high (S = 1); and

deriving a secondary resistance of the secondary winding on the basis of the primary resistance which derivation occurring while the slip frequency of the induction motor is one (S = 1).

## BRIEF DESCRIPTION OF THE DRAWINGS

The present invention will be understood more fully from the detailed description given herebelow and from the accompanying drawings of the preferred embodiment of the invention, which, however, should not be taken to limit the invention to the specific embodiment but are for explanation and understanding only.

In the drawings:

**Fig. 1** is a block diagram of the preferred embodiment of a revolution speed control system for an induction motor, according to the invention;

**Fig. 2** is a circuit diagram of the an inverter circuit which employs improved power transistor circuits, applicable in the revolution control system for the induction motor; and

**Fig. 3** shows waveforms at various section in the inverter circuit of **Fig. 2**.

## DESCRIPTION OF THE PREFERRED EMBODIMENT

Referring now to the drawings, the preferred embodiment of a revolution speed control system for an induction motor, according to the present invention, generally comprises an inverter circuit **10** connected to an induction motor **20**. The inverter circuit **10** includes an inverter section **12** and a control section **14**. The control section **14** may comprise a digital processor for processing data to produce a control signal for driving the induction motor **20** at a controlled revolution speed.

The inverter circuit **10** may be a voltage source inverter or a current source inverter. On the other hand, the inverter main circuit in the inverter section **12** may be a transistor inverter, GTO inverter, thyrister inverter, a MOS FET (metal oxide semiconductor field effect transistor) inverter or so forth.

The induction motor **20** includes a primary winding **22** and a secondary winding **24**. The primary winding **22** is connected to the inverter circuit **10** to receive alternating current as a driver signal.

A voltmeter **30** is connected to a power supply wiring connecting the inverter circuit **10** and the induction motor **20** to monitor the output voltage $V_1$ of the inverter circuit. An ampermeter 32 is also connected to the power supply wiring to monitor the output current $I_1$ of the inverter circuit **10**. The voltmeter **30** and the ampermeter **32** are connected to the control section to input a primary voltage indicative signal $DV_1$ and a primary current indicative signal $DI_1$.

The control section **14** receives the primary voltage indicative signal $DV_1$ from the voltmeter **30** and the primary current indicative signal $DI_1$ from the ampermeter **32**. The control section **14** is active while preliminary excitation for applying a small level of DC current or extremely low frequency AC current for projecting a secondary resistance indicative data $Dr_2$ representative of projected secondary resistance $r_2$ of the secondary winding **24**, on the basis of the primary voltage indicative signal value and the primary current indicative signal value.

Here, a primary resistance $r_1$ of the primary winding **22** can be derived on the basis of the primary voltage indicative signal value and the primary current indicative signal value according to

the following equations:

$$V_1 = I_1 \times r_1$$
$$r_1 = V_1/I_1$$

When the substantially lower frequency current or DC current is applied to the induction motor **20**, slip S in the induction motor is held at "one" While the slip S of the induction motor is held at "one" primary resistance $r_1$ can be derived on the basis of the primary voltage indicative signal value and the primary current indicative signal value, as set forth above. In the case of the large capacity induction motors, such as those designed for driving an elevator cage, the temperature dependent variation of resistances $r_1$ and $r_2$ in the primary and the secondary windings **22** and **24** are proportional to each other. Therefore, by deriving temperature dependent variation of the primary resistance $r_1$ in the primary winding **22**, temperature dependent variation of the secondary resistance $r_2$ can be projected based on the derived primary resistance.

In the practical control, the primary current $I_1$ is set at a fixed value. By this, the relationship between variation of the primary voltage and secondary resistances $r_1$ and $r_2$ can be established according to the formula:

$$r_{2t} = r_{2s} \times V_1/V_{1s}$$

where

    $r_{2t}$    is a projected secondary resistance;

    $r_{2s}$    is a reference secondary resistance at a reference temperature; and

    $V_{1s}$    is a reference primary voltage at a reference temperature.

The control section **14** thus derives a motor speed control signal on the basis of the projected secondary resistance value $r_{2t}$. By deriving the motor speed control signal using the projected secondary resistance indicative value $Dr_2$, the relationship between the slip S and a secondary current $I_2$ can be corrected.

In the shown embodiment, since only the addition of voltmeter **30** for monitoring the primary voltage is required, and the voltmeter can be built in the inverter circuit **10**, no other additional elements are required for precise motor speed control. Furthermore, since the projected secondary resistance $r_2$ can be derived by a simple arithmetic operation, the processing load on the control section **14** is not substantially increased. In addition, since the projected secondary resistance $r_2$ can be derived while preliminary excitation is performed, the motor speed control and/or torque control for the induction motor can be performed from the instant the induction motor is started. This is particularly advantagous in the speed control for the induction motor for driving elevator cages. Specifically, in case of the induction motor for the elevators, the passenger load is first monitored for driving the induction motor to generate a driving torque which corresponds to the passager load while a mechanical brake is applied. After the motor torque is increased to the required torque, the mechanical brake is released so that the elevator cage starts without any noticable shock.

Furthermore, since the temperature condition of the secondary winding can be detected based on the variation of the secondary resistance, the shown method of detection of the secondary resistance can be used for detecting an over-load condition of the motor. In addition, in the case of induction motors for elevators, which are intermittently driven at invervals, the operation for projecting the secondary resistance can be performed within the intervals to provide satisfactory, practical and acceptably precise motor speed control.

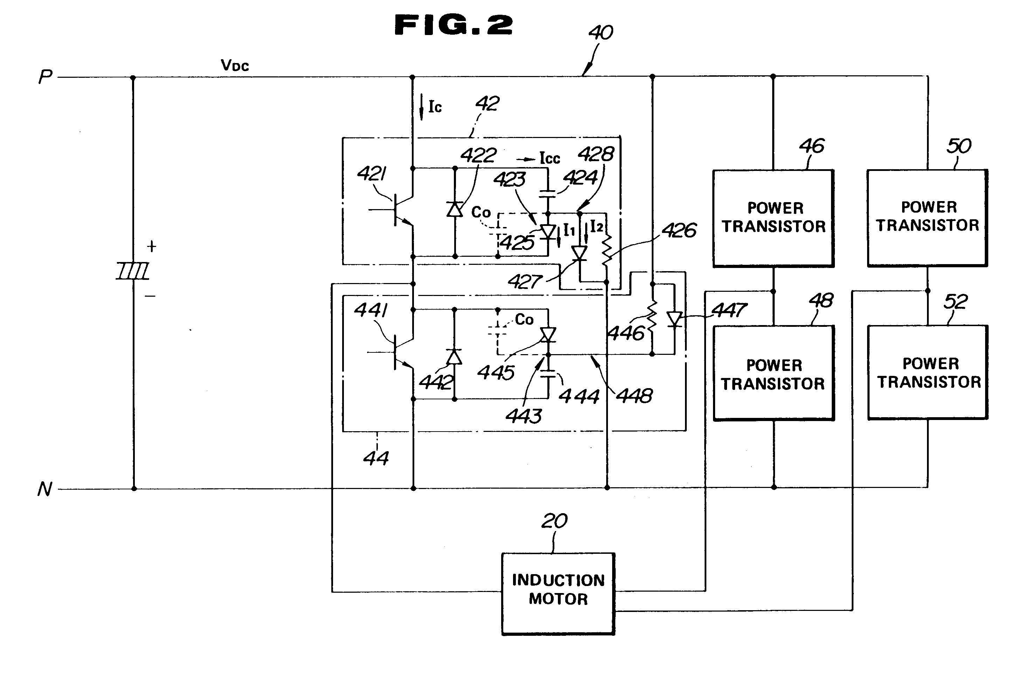

In cases where the preferred embodiment of the motor speed control system employs a transistor inverter, the main circuit of the inverter section may be constructed as illustrated in **Fig. 2**. In the circuit construction of the inverter main circuit of **Fig. 2**, the inverter main circuit is connected to a known converter circuit (not shown) to receive a direct current power supply therefrom. The inverter main circuit generally comprises a smoothing stage (not shown) and an inverter stage which is generally represented by the reference numeral **40**. The inverter stage **40** includes pairs of the preferred embodiment of power transistor circuits **42**, **44**; **46**, **48**; and **50**, **52**. These pairs of the power transistor circuits **42**, **44**; **46**, **48**; and **50**, **52** are connected to the induction motor **20**. On the other hand, the power transistors **42**, **44**; **46**, **48**; and **50**, **52** are connected to the control section **12** to control the switching timing for generating a single-phase alternating current to supply to the induction motor **20**, in the manner set forth above.

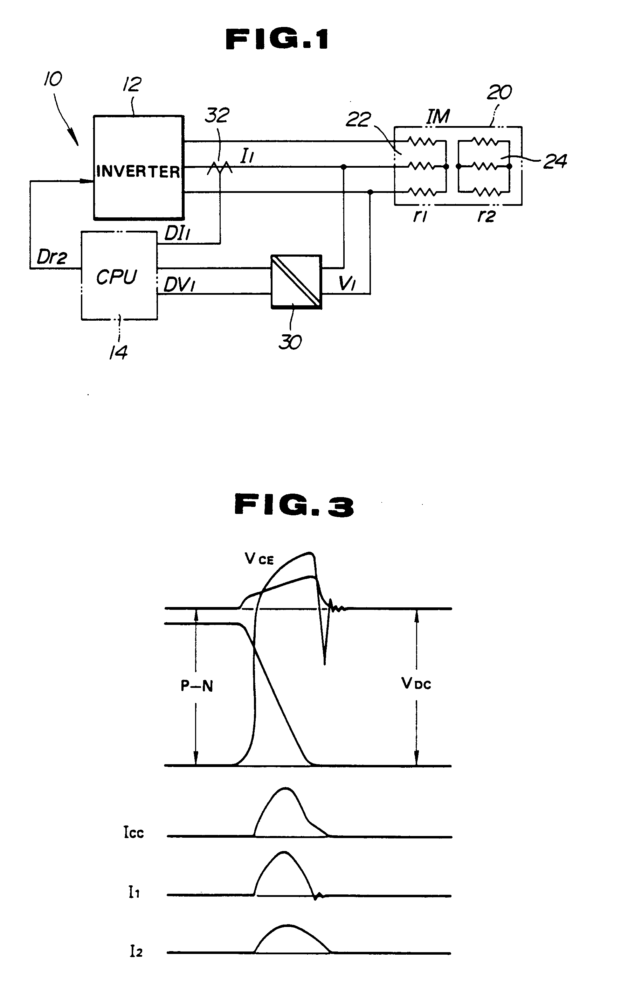

It should be noted that the power transistor circuits **46**, **48**; and **50**, **52** are identical in construction to the power transistors **42** and **44**. Therefore, detailed construction of these power transistor circuits **46**, **48**; and **50**, **52** are not shown in **Fig. 1**.

The power transistor circuit **42** includes a power transistor **421** connected to the switching signal generator of the control circuit at the base electrode. The collector electrode of the power transistor **421** receives the power source current Ic from the converter. In parallel to the collector-emitter circuit of the power transistor **421**, a flywheel diode **422** is connected. A first clipper circuit **423** comprising a capacitor **424** and a first diode **425**, is also provided in parallel to the the collector-emitter circuit of the power transistor **421**. The junction between the capacitor **424** and the first diode **425**,

is connected to the negative terminal of the converter via a discharge resistor **426**. A second diode **427** is also connected to the junction between the capacitor **424** and the first diode **425** in parallel to the discharge register **426**. The second diode **425** is thus forms a second clipper circuit **428** with the capacitor **424**.

In the preferred construction, the second diode **427** of the second clipper circuit **428** is so designed and connected as to provide much greater inductance (L) for the second clipper circuit **428** than that of the first clipper circuit **423**.

Similarly to the power transistor circuit **42**, the power transistor **44** includes a power transistor **441** connected to the switching signal generator of the control circuit at the base electrode. The collector electrode of the power transistor **441** is connected to the emitter electrode of the power transistor **421** to form a series circuit of the power transistors **421** and **441**. The emitter electrode of the power transistor **441** is connected to negative terminal of the converter. The junction between the power transistors **421** and **441** is connected to the induction motor **20**.

A flywheel diode **442** is connected in parallel to the collector-emitter circuit of the power transistor **441**. A first clipper circuit **443** comprising a capacitor **444** and a first diode **445**, is also provided in parallel to the the collector-emitter circuit of the power transistor **441**. The junction between the capacitor **444** and the first diode **445**, is connected to the negative terminal of the converter via a discharge resistor **446**. A second diode **447** is also connected to the junction between the capacitor **444** and the first diode **445** in parallel to the discharge register **446**. The second diode **445** thus forms a second clipper circuit **448** with the capacitor **444**.

The second diode **447** of the second clipper circuit **448** is so designed and connected as to provide much greater inductance (L) for the second clipper circuit **448** than that of the first clipper circuit **443**.

The second clipper circuits **428** and **448** perform an equivalent function to the power source clipper circuit in the conventional inverter main circuit for absorbing surge voltages generated in the converter which functions as the DC power source, upon shutting OFF of the power supply. These second clipper circuits **428** and **448** are also cooperative with the first clipper circuits **423** and **443** to suppress voltage fluctuations caused in OFF-set transistion of respectively associated power transistors **421** and **441**.

Absorption of the voltage fluctuations in the first and second clipper circuits **423** and **428** of the power transistor circuit **42** will be discussed herebelow. When the power transistor **421** is turned OFF, load current Ic at the collector electrode of the power transistor **421** commutates to flow through the capacitor **424** as shunted current Icc. The current past the capacitor **424** is further shunted to flow through the diodes **425** and **427** as shunted currents $I_1$ and $I_2$. By this, the capacitor **424** is charged. By this, the connector-emitter voltage $V_{CE}$ of the power traisnsitor **421** is raised according to the charge in capacitor **424**.

The smoothing capacitor **22** serves to absorbing surge energy for suppressing fluctuation of the power source voltage $V_{DC}$.

According to increase of the charge of the capacitor **424**, the shunted currents $I_1$ and $I_2$ flowing through the diodes **425** and **427** decrease to zero. In the shown embodiment, the first and second clipper circuits **423** and **428** are so constructed as to maintain the shunted current $I_2$ flowing the diode **427** even after the shunted current $I_1$ of the diode **425** becomes zero, as shown in **Fig. 3**. By this, voltage fluctuations in the collector-emitter circuit of the power transistor **421** caused by recovery of the diode **425** upon drop of the shunted current $I_1$ flowing therethrough to zero, can be held to a substantially small magnitude. The magnitude of voltage fluctuation at termination of the shunted current $I_1$ is suppressed enough that snubber circuit which is required in conventional circuits, becomes unnecessary.

Upon termination of the shunted current $I_2$, recovery of the diode **427** causes voltage fluctuation due to L and C in the whole circuit of the inverter main circuit. However, since the second clipper circuit **428** is so designed as to have much greater L than that of the first clipper circuit, frequency of voltage fluctuation can be kept at low. Furthermore, backward resistance of the diode **427** aids suppression of the voltage fluctuation. Therefore, even upon recovery of the diode **427**, high frequency voltage fluctuation which tends to cause breakage of the power transistor **421** can be successfully suppressed.

It should be noted that the voltage fluctuation suppressive operation performed by the power transistor circuit **44** is substantially the same as that of the power transistor circuit **42** as set forth above. Therefore, detailed discussion of the circuit operation of the power transistor circuit **44** is neglected in order to simplify the disclosure and to avoid redundance.

In the circuit construction shown in **Fig. 1** and disclosed hereabove, it is further preferable to provide a capacitor $C_0$ which has substantially smaller capacity than that of the capaqcitors **424** and **444**. The capacity of these capacitors $C_0$ can be one tenth of the capacity of the capactor **424**, **444**, for example. The capacitor $C_0$ may be effective for supresing large magnitude surge voltage which may be caused upon termination of the shunt current flowing through the diodes **424** and **427**.

Thus, the invention fulfills all of the objects and advantages sought therefor.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the scope of the invention set out in the appended claims.

**Claims**

1. A control system for an induction motor (20) including a primary winding (22) and a secondary winding (24) comprising:

    a driver circuit (12) connected to said induction motor (20) for supplying a driving power for said induction motor (20);

    a first sensor (32) monitoring a primary current ($I_1$) of said driving power to be supplied to said primary winding (22);

    a second sensor (30) monitoring a primary voltage ($V_1$) of said driving power to be supplied to said primary winding (22);

    first means, in a central processing unit (14), for deriving a primary resistance ($r_1$) in said primary winding (22) on the basis of said primary current ($I_1$) and said primary voltage ($V_1$); said first means being active while the slip frequency of said induction motor (20) is one (S = 1);

    a second means, in the central processing unit (14), for deriving a secondary resistance ($r_2$) of said secondary winding (24) on the basis of said primary resistance, said second means being active while slip frequency of said induction motor (20) is one (S = 1); and

    a third means, in the central processing unit (14), for deriving a control signal to control said driving power on the basis of said primary voltage ($V_1$) and said secondary resistance ($r_2$).

2. A control system for an induction motor (20) as set forth in claim 1, wherein said first and second means are active while very low frequency current or direct current is applied to said induction motor (20).

3. A control system for an induction motor as set forth in claim 2, wherein said first means and second means are active while a fixed constant current is applied to said primary winding (22) in order to derive said primary resistance on the basis of said primary volgage ($V_1$).

4. A control system for an induction motor (20) as set forth in claim 1, 2 or 3 which further comprises an inverter circuit for driving said induction motor, which inverter circuit including a power transistor circuit (42) comprising:

    a power transistor (421) connected to a power source and switching between a first state for establishing a collector-emitter circuit and a second state for blocking said collector emitter circut for supplying drive power to a load connected thereto; and

    a clipper circuit for absorbing surge energy to be generated upon switching of said power transistor (421) from said first state to said second state, said clipper circuit including

    a first clipper circuit (423) connected in parallel to a collector-emitter circuit of said power transistor (421) and including a capacitor (424) and a first diode (425); and

    a second clipper circuit (428) including a second diode (427) connected to said capacitor (424) in parallel to a discharge resistor (426).

5. A control system for an induction motor (20) as set forth in any of claims 1 to 4, which further comprises an inverter which is connected to DC current source via a smoothing circuit including a smoothing capacitor, said inverter circuit comprising:

    a plurality of power transistor circuits connected to a load for suppling a driving alternating current to the latter, each of said power transistor circuits including a power transistor switching between a first state for establishing a collector-emitter circuit and a second state for blocking said collector emitter circuit; and

    a clipper circuit for absorbing surge energy generated upon switching of said power transistor from said first state to said second state, said clipper circuit including a first clipper circuit connected in parallel to a collector-emitter circuit of said power transistor and including a capacitor and a first diode, and a second clipper circuit including a second diode connected to said capacitor in parallel to a discharge resistor.

6. A method for deriving a secondary winding resistance in an induction motor (20) which has a primary winding (22) connected to a driving power source and a secondary winding (24), as a control parameter for controlling driving torque and/or revolution speed of said induction motor (20), comprising the steps of:

monitoring a primary current ($I_1$) in said driving power to be supplied to said primary winding (22);

monitoring a primary voltage ($V_1$) in said driving power to be supplied to said primary winding (22);

deriving a primary resistance ($r_1$) in said primary winding (22) on the basis of said primary current ($I_1$) and said primary voltage ($V_1$), said derivation of said primary resistance ($r_1$) occurring while the slip frequency of said induction motor (20) is one (S = 1); and

deriving a secondary resistance ($r_2$) of said secondary winding (24) on the basis of said primary resistance, said derivation of said secondary winding resistance (r2) occurring while the slip frequency of said induction motor (20) is one (S = 1).

7. A method as set forth in claim 6, wherein the derivation of said secondary winding resistance ($r_2$) is performed while very low frequency current or direct current is applied to said induction motor (20).

**Patentansprüche**

1. Regelsystem für einen Asynchronmotor (20), der eine Primärwicklung (22) und eine Sekundärwicklung (24) aufweist, umfassend:
eine an den Asynchronmotor (20) angeschlossene Treiberschaltung (12) für die Zufuhr einer Antriebsleistung für den Asynchronmotor (20);

einen ersten Sensor (32), der einen Primärstrom ($I_1$) der an die Primärwicklung (22) zu liefernden Ahtriebsleistung überwacht;

einen zweiten Sensor (30), der eine Primärspannung ($V_1$) der an die Primärwicklung (22) zu liefernden Antriebsleistung überwacht;

eine erste, in einer zentralen Verarbeitungseinrichtung (14) befindliche Einrichtung zum Ableiten eines Primärwiderstands ($r_1$) in der Primärwicklung (22) auf der Grundlage des Primärstroms ($I_1$) und der Primärspannung ($V_1$), wobei die erste Einrichtung aktiv ist, während die Schlupffrequenz des Asynchronmotors (20) eins beträgt (S = 1);

eine in der zentralen Verarbeitungseinheit (14) vorhandene zweite Einrichtung zum Ableiten eines zweiten Widerstands ($r_2$) der Sekundärwicklung (24) auf der Grundlage des Primärwiderstands, wobei die zweite Einrichtung aktiv ist, während die Schlupffrequenz des Asynchronmotors (20) eins (S = 1) beträgt; und

eine dritte in der zentralen Verarbeitungseinheit (14) befindliche Einrichtung zum Ableiten eines Steuersignals zum Steuern der Antriebsleistung auf der Grundlage der Primärspannung ($V_1$) und des Sekundärwiderstands ($r_2$).

2. Regelsystem für einen Asynchronmotor (20) nach Anspruch 1, bei dem die erste und die zweite Einrichtung aktiv sind, während ein Strom sehr geringer Frequenz oder Gleichstrom an den Asynchronmotor (20) gelegt wird.

3. Regelsystem für einen Asynchronmotor nach Anspruch 2, bei dem die erste Einrichtung und die zweite Einrichtung aktiv sind, während ein fixer konstanter Strom in die Primärwicklung (22) eingespeist wird, um den Primärwiderstand auf der Grundlage der Primärspannung ($V_1$) abzuleiten.

4. Regelsystem für einen Asynchronmotor (20) nach Anspruch 1, 2 oder 3, welches außerdem eine Wechselrichterschaltung zum Treiben des Asynchronmotors aufweist, welche eine Leistungstransistorschaltung (42) enthält, umfassend:

einen Leistungstransistor (421), der an eine Energiequelle angeschlossen ist und umschaltet zwischen einem ersten Zustand zur Schaffung einer Kollektor-Emitter-Strecke und einem zweiten Zustand zum Sperren der Kollektor-Emitter-Strecke, um einer daran angeschlossenen Last Antriebsleistung zuzuführen; und

eine Amplitudenbegrenzerschaltung zum Absorbieren von Überspannungsenergie, die beim Schalten des Leistungstransistors (421) von dem ersten Zustand in den zweiten Zustand erzeugt wird, wobei die Amplitudenbegrenzerschaltung aufweist:
eine erste Begrenzerschaltung (423), die parallel zu einer Kollektor-Emitterstrecke des Leistungstransistors (421) geschaltet ist und einen Kondensator (424) und eine erste Diode (425) enthält; und

eine zweite Begrenzerschaltung (428), die eine zweite Diode (427) enthält, die parallel zu einem Entladewiderstand (426) an den Kondensator (424) angeschlossen ist.

5. Regelsystem für einen Asynchronmotor (20) nach irgendeinem der Ansprüche 1 bis 4, weiterhin umfassend einen Wechselrichter, der über eine einen Glättungskondensator enthaltende Glättungsschaltung an eine Gleichstromquelle angeschlossen ist, wobei die Wechselrichterschaltung enthält:

mehrere Leistungstransistorschaltungen, die an eine Last angeschlossen ist, um dieser einen Antriebs-Wechselstrom zuzuführen, wobei jede der Leistungstransistorschaltungen einen Leistungstransistor enthält, der zwischen einem ersten Zustand zur Schaffung einer Kollektor-Emitter-Strecke und einem zweiten Zustand zum Sperren der Kollektor-Emitter-Strecke umschaltbar ist; und

eine Begrenzerschaltung zum Absorbieren von Überspannungsenergie, die beim Schalten des Leistungstransistors von dem ersten Zustand in den zweiten Zustand erzeugt wird, wobei die Begrenzerschaltung eine erste Begrenzerschaltung enthält, die parallel zu einer Kollektor-Emitter-Strecke des Leistungstransistors geschaltet ist und einen Kondensator sowie ein erste Diode enthält, und eine zweite Begrenzerschaltung aufweist, die eine zweite Diode enthält, die parallel zu einem Entladewiderstand an den Kondensator angeschlossen ist.

Verfahren zum Ableiten eines Sekundärwicklungswiderstands in einem Asynchronmotor (20), der eine an eine Antriebsleistungsquelle angeschlossene Primärwicklung (22) und eine Sekundärwicklung (24) aufweist, als Regelparameter für die Regelung des Antriebsdrehmoments und/oder der Drehzahl des Asynchronmotors (20), umfassend die Schritte:

Überwachen eines Primärstroms ($I_1$) der der Primärwicklung (22) zuzuführenden Antriebsleistung;

Überwachen einer Primärspannung ($V_1$) der der Primärwicklung (22) zuzuführenden Antriebsleistung;

Ableiten eines Primärwiderstand ($r_1$) in der Primärwicklung (22) auf der Grundlage des Primärstroms ($I_1$) und der Primärspannung ($V_1$), wobei die Abweichung des Primärwiderstands ($r_1$) auftritt, während die Schlupffrequenz des Asynchronmotors (20) eins (S = 1) beträgt; und

Ableiten eines Sekundärwiderstands ($r_2$) der Sekundärwicklung (24) auf der Grundlage des Primärwiderstands, wobei die Ableitung des Sekundärwicklungswiderstands ($r_2$) erfolgt, während die Schlupffrequenz des Asynchronmotors (20) eins (S = 1) beträgt.

7. Verfahren nach Anspruch 6, bei dem das Ableiten des Sekundärwicklungswiderstands ($r_2$) erfolgt, während ein Strom sehr niedriger Frequenz oder Gleichstrom in den Asynchronmotor (20) eingespeist wird.

# Revendications

1. Système de commande pour un moteur à induction (20) comprenant un enroulement primaire (22) et un enroulement secondaire (24) comprenant :

un circuit d'alimentation (12) connecté audit moteur à induction (20) pour lui fournir une énergie d'alimentation ;

un premier capteur (32) qui surveille une intensité primaire ($I_1$) de ladite énergie d'alimentation à fournir à l'enroulement primaire (22) ;

un deuxième capteur (30) qui surveille la tension primaire ($V_1$) de l'énergie d'alimentation à fournir audit enroulement primaire (22) ;

des premiers moyens, inclus dans une unité de traitement centrale (14), destinés à calculer la résistance primaire ($r_1$) dudit enroulement primaire (22) sur la base de ladite intensité primaire ($I_1$) et de ladite tension primaire ($V_1$), lesdits premiers moyens étant actifs pendant que la fréquence de glissement dudit moteur à induction (20) est de un (S = 1) ;

des seconds moyens, inclus dans l'unité de traitement centrale (14), destinés à calculer la résistance secondaire ($r_2$) dudit enroulement secondaire (24) sur la base de ladite résistance primaire, les seconds moyens étant actifs pendant que la fréquence de glissement dudit moteur à induction (20) est de un (S = 1) ; et

des troisièmes moyens, inclus dans l'unité de traitement centrale (14), destinés à calculer un signal de commande pour commander l'énergie d'alimentation sur la base de ladite tension primaire ($V_1$) et de ladite résistance secondaire ($r_2$).

2. Système de commande pour un moteur à induction (20) selon la revendication 1 dans lequel les premiers et seconds moyens sont actifs pendant qu'une intensité du courant à basse fréquence ou une intensité de courant continu est appliquée audit moteur à induction (20).

3. Système de commande pour un moteur à induction (20), selon la revendication 2 dans lequel lesdits premiers moyens et lesdits seconds moyens sont actifs pendant qu'une intensité constante fixe est appliquée audit enroulement primaire (22) pour calculer ladite résistance primaire sur la base de ladite tension primaire ($V_1$).

4. Système de commande pour un moteur à induction (20) selon l'une des revendications 1, 2 ou 3, qui comprend en outre un circuit onduleur pour alimenter ledit moteur à induction, lequel circuit onduleur étant constitué par un circuit (42) à transistor de puissance qui comprend :

un transistor de puissance (421) connecté à une source d'électricité et qui commute entre un premier état où il établit un circuit collecteur-émetteur, et un second état où il rend non conducteur ledit circuit collecteur-émetteur, et fournit une énergie d'alimentation à une charge qui lui est connectée ; et

un circuit d'écrêtage destiné à absorber l'énergie de pointe qui doit être engendrée lors de la commutation dudit transistor de puissance (421) dudit premier état audit second état, ledit circuit d'écrêtage comprenant

un premier circuit d'écrêtage (423) connecté en parallèle avec le circuit collecteur-émetteur dudit transistor de puissance (421) et comprenant un condensateur (424) et une première diode (425) ; et

un second circuit d'écrêtage (428) comprenant une seconde diode (427) connectée audit condensateur (424) en parallèle avec une résistance de décharge (426).

5. Système de commande pour un moteur à induction (20) selon l'une quelconque des revendications 1 à 4, qui comprend en outre un onduleur qui est connecté à une source de courant continu à travers un circuit de nivellement comprenant un condensateur de nivellement, ledit circuit onduleur comprenant :

une pluralité de circuits à transistor de puissance connectés à une charge pour fournir un courant alternatif d'alimentation à cette charge, chacun desdits circuits à transistor de puissance comprenant un transistor de puissance qui commute entre un premier état où il établit un circuit collecteur-émetteur, et un second état où il rend non conducteur ledit circuit collecteur-émetteur ; et

un circuit d'écrêtage destiné à absorber l'énergie de pointe engendrée lors de la commutation dudit transistor de puissance dudit premier état audit second état, ledit circuit d'écrêtage comprenant un premier circuit d'écrêtage connecté en parallèle avec un circuit collecteur-émetteur dudit transistor de puissance et comprenant un condensateur et une première diode, et un second circuit d'écrêtage comprenant une seconde diode connectée audit condensateur en parallèle avec une résistance de décharge.

6. Procédé pour calculer la résistance de l'enroulement secondaire d'un moteur à induction (20) qui comprend un enroulement primaire (22) connecté à une source d'énergie d'alimentation et un enroulement secondaire (24), pour servir de paramètre de commande pour commander le couple d'entraînement et/ou la vitesse de rotation du moteur à induction, ledit procédé comprenant les phases consistant à :

surveiller l'intensité primaire ($I_1$) de l'énergie d'alimentation qui est fournie audit enroulement primaire (22) ;

surveiller la tension primaire ($V_1$) de l'énergie d'alimentation fournie audit enroulement primaire (22) ;

calculer la résistance primaire ($r_1$) dudit enroulement primaire (22) sur la base de ladite intensité primaire ($I_1$) et de ladite tension primaire ($V_1$), ledit calcul de ladite résistance primaire ($r_1$) se produisant Pendant que la fréquence de glissement dudit moteur à induction (20) est de un ($S = 1$) ; et

calculer la résistance secondaire ($r_2$) dudit enroulement secondaire (24) sur la base de ladite résistance primaire, ledit calcul de ladite résistance ($r_2$) de l'enroulement secondaire se produisant pendant que la fréquence de glissement dudit moteur à induction (20) est de un ($S = 1$).

7. Procédé selon la revendication 6, dans lequel le calcul de ladite résistance ($r_2$) de l'enroulement secondaire est exécuté pendant qu'un courant de très basse fréquence ou un courant continu est appliqué audit moteur à induction (20).

# FIG.1

# FIG.3

# FIG.2

EP 0 313 671 B1